# EUROPEAN PATENT SPECIFICATION

(11) **EP 2 116 714 B1**
(45) Date of publication and mention of the grant of the patent: **26.10.2011**
(21) Application number: 07806238.7
(22) Date of filing: 29.08.2007
(51) Int. Cl.: B64C 15/02, F02K 1/78, B64D 33/00, F02C 7/20, F02K 1/44

(54) **LOW NOISE AIRCRAFT**
GERÄUSCHARMES LUFTFAHRZEUG
AERONEF A FAIBLE BRUIT

(30) Priority: 30.01.2007 JP 2007019456
(43) Date of publication of application: 11.11.2009
(73) Proprietor: Japan Aerospace Exploration Agency, Chofu-shi, Tokyo 182-8522 (JP)
(72) Inventor: HORINOUCHI, Shigeru, Chofu-shi Tokyo 182-8522 (JP)
(74) Representative: von Kreisler Selting Werner
(86) International application number: PCT/JP2007/066761
(87) International publication number: WO 2008/093447

(56) References cited:
- DE-A1- 10 033 653
- JP-A- 50 135 416
- JP-A- 51 077 712
- JP-A- 2000 205 045
- JP-A- 2004 530 078
- US-A1- 2002 189 896
- US-A1- 2003 159 430

## Description

### TECHNICAL FIELD

This invention relates to a low noise aircraft, and in particular relates to a low noise aircraft which, by utilizing thrust deflection means constituted of a well-known mechanism, can greatly reduce engine noise on the ground during aircraft takeoff and landing.

### BACKGROUND ART

In general, it is required that the engine noise of aircraft be suppressed during takeoff and landing, in order to satisfy the regulation for environmental compatibility.

The main sources of generation of engine noise are fan noise, which is generated from the intake toward the front, and jet mixing noise, which is generated from the exhaust nozzle toward the rear. As a basic approach to reducing engine noise directed to the rear of an aircraft, reduction of the jet exhaust speed is effective. To this end, methods such as increasing the engine bypass ratio or installing noise-absorbing ducts and low-noise nozzles on the rear portion of the engine are being studied or implemented (see for example Patent Document 1 and Patent Document 2). However, these technologies have the problems of increased aerodynamic drag of the airframe and increased engine weight, and in addition to these drawbacks, the effect in reducing noise cannot be described as adequate. In particular, an increase in the engine bypass ratio in a supersonic aircraft is incompatible with supersonic flight performance, and so entails substantial compromises in design. Also, given current technology, the above-described noise-absorbing ducts and low-noise nozzles also result in substantial weight increases, and as a result the development of engine noise reduction devices which are useful for supersonic aircraft has lagged. For example, Concorde, a supersonic transport aircraft developed in Europe approximately 30 years ago, generated the extremely loud noise upon takeoffs and landings. This problem is not limited to supersonic aircraft; reduction of noise during takeoffs and landings remains a major problem for subsonic aircraft, and there has been a trend toward increasingly stringent noise standards from year to year.

Patent Document 1 : Japanese Patent Application Laid-open No. 8-135505
Patent Document 2: Japanese Patent Application Laid-open No. 7-208263 Document US 2003/0159430 is considered the closest prior art and discloses an aircraft having thrust deflection means.

### DISCLOSURE OF THE INVENTION

As explained above, reduction of engine noise at the time of takeoff and landing of an aircraft is an important engineering problem, and in the past, reduction of engine noise during aircraft takeoff and landing has been achieved by adding noise-absorbing ducts and ejectors to the exhaust nozzle portions of engines.

However, such conventional noise reduction devices have such problems as resulting in increases aerodynamic drag and increased engine weight, and the effect in reducing noise has not been adequate.

Hence this invention was devised in light of the above circumstances, and has as an object to provide a low noise aircraft which, by utilizing thrust deflection means comprising a well-known mechanism, can greatly reduce engine noise on the ground at the time of aircraft takeoff and landing.

In order to attain the above object, the low noise aircraft is an aircraft having thrust deflection means for making the direction of thrust variable, as defined by the features of claim 1.

In the above low noise aircraft, thrust deflection means is comprised which makes variable the engine exhaust direction of the aircraft, and moreover by deflecting the engine exhaust direction to the upper side relative to the flight direction, strong noise components are dispersed up into the air, and weak noise components are emitted toward the ground. However, by deflecting the engine exhaust direction to the upper side relative to the flight direction, the distance of the aircraft above the ground is reduced, and an effect of increasing the noise level occurs as a result; but as described below, the noise reduction level due to this invention is large enough, which remains effective even after the effect of the increased noise level due to the reduced distance is subtracted. Further, because a well-known mechanism is adopted in the thrust deflection means, the problems of an increase in the aerodynamic drag and an increase in the engine weight, which are observed in conventional noise reduction devices, do not occur, and moreover combined use with these is also possible.

In the low noise aircraft of Claim 2, the thrust deflection means is a thrust deflection-type exhaust nozzle, which is a nozzle installed on an outlet portion of the engine, and which can optionally change the exhaust jet direction by changing the direction of the normal vector of an opening face of the nozzle.

In the above low noise aircraft, by means of the above configuration, the engine exhaust direction can be changed using a well-known mechanism, and as a result strong noise components can be suitably dispersed up into the air, and weak noise components can be emitted toward the ground.

In the low noise aircraft of Claim 3, the thrust deflection-type exhaust nozzle comprises an upper deflection nozzle and a lower deflection nozzle, which are substantially symmetrical, and the two deflection nozzles are respectively equivalent to upstream-side halves (+(180°-θ), -(180°-θ)) resulting when a cylinder, which has been cut in a center plane thereof with the center axis being included, is further V-cut by two planes symmetrical relative to the center plane at angles ±θ (0 < θ < 90°) from the center plane.

In the above low noise aircraft, by forming the thrust deflection-type exhaust nozzle using an upper deflection nozzle and a lower deflection nozzle, each of the outlet end faces of the upper deflection nozzle and lower deflection nozzle can be joined using a well-known mechanism. As a result, the engine exhaust direction can be deflected in the opposite direction (more than ±90°), and consequently, during a landing run the engine can be caused to generate reverse thrust. Hence by installing this thrust deflection-type exhaust nozzle on the rear portion of an engine, the exhaust noise of the engine during takeoffs and landings of the aircraft can be greatly reduced, and moreover the braking function (deceleration performance) of the aircraft during landing runs can be enhanced.

In the low noise aircraft of Claim 4, a front opening portion of the thrust deflection-type exhaust nozzle, into which the exhaust jet flows, has a tapered shape, such that the outermost axis length of the lower deflection nozzle is longer than the outermost axis length of the upper deflection nozzle.

In the above low noise aircraft, by using a tapered shape for the front opening portion of the thrust deflection-type exhaust nozzle into which the exhaust jet flows, in a thrust deflection mode during takeoffs and landings of the aircraft in particular, the exhaust jet ejected from the engine exhaust pipe can be suitably deflected without causing airflow separation.

In the low noise aircraft of Claim 5, the thrust deflection means is a rotation-type engine, having a rotation mechanism, which can change the exhaust jet direction in an optional direction by changing the installation angle of the engine.

In the above low noise aircraft, by means of the above configuration, the engine exhaust direction can be changed by a well-known mechanism, and as a result strong noise components can be suitably dispersed up into the air, and weak noise components can be emitted toward the ground.

In the low noise aircraft of Claim 6, the thrust deflection means is a thrust deflection plate, which is positioned behind the outlet portion of the engine, and which can change the exhaust jet direction to an optional direction by changing the angle of intersection with the engine exhaust.

In the above low noise aircraft, by means of the above configuration, the engine exhaust direction can be changed by a well-known mechanism, and as a result strong noise components can be suitably dispersed up into the air, and weak noise components can be emitted toward the ground.

### EFFECT OF THE INVENTION

By means of a low noise aircraft of this invention, the engine exhaust direction during takeoff and landing can be deflected to the upper side relative to the flight direction, and the direction of maximum propagation of engine jet exhaust noise can be kept away from the ground. In general, the purpose of thrust deflection during takeoff and landing is to increase lift force and improve takeoff and landing performance by deflecting the engine exhaust direction in the lower direction relative to the flight direction. However, in the low noise aircraft of this invention, by deflecting the engine exhaust direction to the upper side relative to the flight direction, which is the opposite direction of the lower side, noise is reduced. At this time, there is some degradation in the climb performance during takeoff, and consequently the climb path angle is lower and the distance from the ground is reduced, so that the effect in noise damping with distance is reduced, and consequently noise is increased, so that the effect is negative. However, the effect in reducing noise by changing the engine exhaust direction to the upper side relative to the flight direction is still large even when this negative effect of an increase in noise is subtracted, so that overall the engine exhaust noise on the ground during takeoffs and landings can be greatly reduced.

Further, when the thrust deflection-type exhaust nozzle which deflects the engine exhaust direction comprises an upper deflection nozzle and a lower deflection nozzle, which are respectively equivalent to the upstream-side halves (+(180°-θ), -(180°-θ)) resulting when a cylinder which has been cut in a center plane comprising the center axis is further V-cut at angles ±θ (0 < θ < 90°) from the center plane by two planes symmetrical about the center plane, the exhaust jet direction can be deflected in the reverse direction, and during a landing run, the engine can be caused to generate reverse thrust. Hence by installing this thrust deflection-type exhaust nozzle on the rear portion of an engine, the exhaust noise of the engine during takeoffs and landings of the aircraft can be greatly reduced, and moreover the braking function (deceleration performance) of the aircraft during landing runs can be enhanced.

### BRIEF DESCRIPTION OF THE DRAWINGS

Fig. 1 is an explanatory diagram showing a mechanism of noise reduction of a low noise aircraft of the invention;
Fig. 2 is an explanatory diagram showing the low noise aircraft of Embodiment 1 of the invention;
Fig. 3 is an explanatory diagram showing the low noise aircraft of Embodiment 2 of the invention;
Fig. 4 is an explanatory diagram showing a thrust deflection-type exhaust nozzle of the invention;
Fig. 5 is an explanatory cross-sectional view of principle portions, showing a thrust deflection-type exhaust nozzle of the invention;
Fig. 6 is an explanatory diagram showing operation in cruising mode of a thrust deflection-type exhaust nozzle;
Fig. 7 is an explanatory diagram showing view A in Fig. 6;
Fig. 8 is an explanatory diagram showing another example of a guide rail;
Fig. 9 is an explanatory diagram showing operation in thrust deflection mode of a thrust deflection-type exhaust nozzle;
Fig. 10 is an explanatory diagram showing operation in reverse thrust mode of a thrust deflection-type exhaust nozzle;
Fig. 11 is an explanatory diagram showing the low noise aircraft of Embodiment 3 of the invention;
Fig. 12 is an explanatory diagram showing the low noise aircraft of Embodiment 4 of the invention;
Fig. 13 is a graph showing directivity of the jet exhaust noise of an aircraft, and is a conceptual diagram of noise directivity, created based on number of examples;
Fig. 14 is an explanatory diagram showing noise measurement points stipulated in the Ordinance for Civil Aeronautics Act;
Fig. 15 is an explanatory diagram showing noise directivity and relative position of an aircraft passing a noise measurement point during takeoff climb;
Fig. 16 is a graph showing the relation between thrust deflection angle and climb path angle;
Fig. 17 is a graph showing the time history of the altitude due to thrust deflection;
Fig. 18 is a graph showing calculated results for the noise propagation direction at a noise measurement point after takeoff and climb;
Fig. 19 is a graph showing the results of calculation of the takeoff climb noise at a noise measurement point, taking as reference the time of liftoff of the aircraft from the runway;
Fig. 20 is a bar graph showing the breakdown of noise reduction for takeoff climb;
Fig. 21 is a bar graph showing the breakdown of noise reduction for takeoff sideline; and
Fig. 22 is a bar graph showing the breakdown of noise reduction for landing approach.

### EXPLANATION OF REFERENCE NUMERALS

100, 200, 300, 400 LOW NOISE AIRCRAFT

### BEST MODE FOR CARRYING OUT THE INVENTION

Below, the invention is explained in greater detail through aspects illustrated in the drawings.

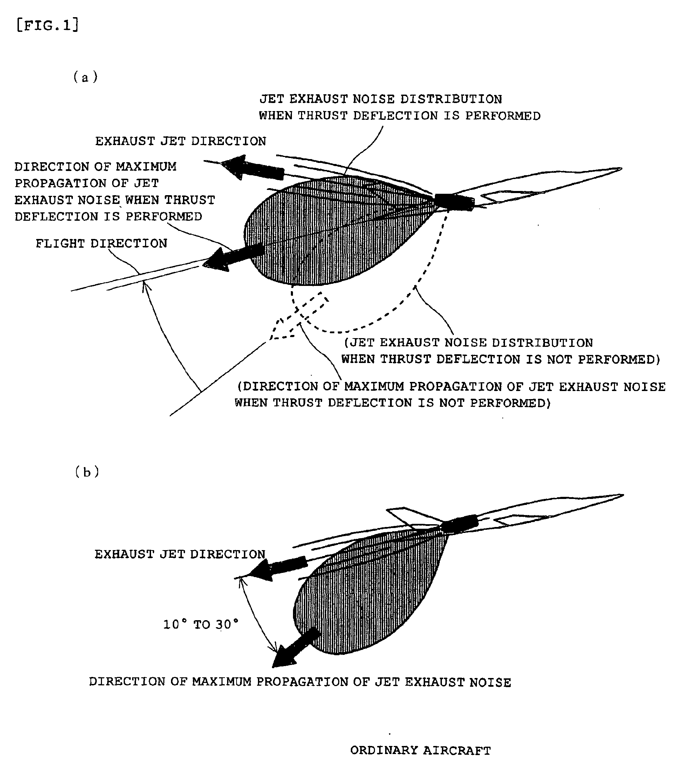

Fig. 1 is an explanatory diagram showing a mechanism of noise reduction of a low noise aircraft of the invention. In Fig. 1, (a) shows the exhaust noise distribution during takeoff of a low noise aircraft of the invention, and (b) shows the jet exhaust noise distribution of an ordinary aircraft.

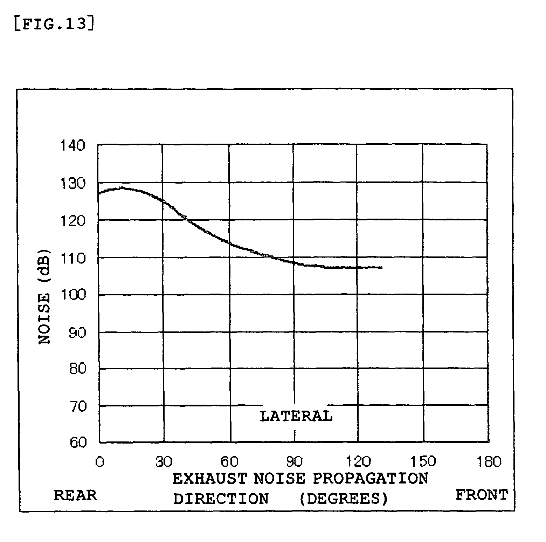

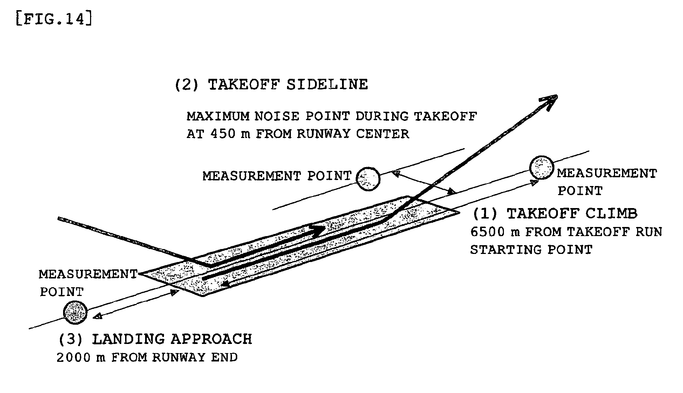

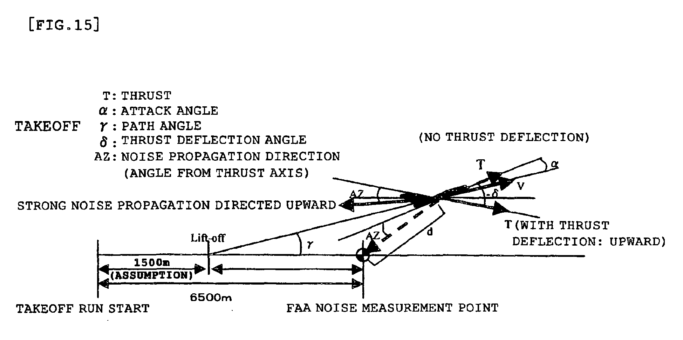

The jet mixing noise of an aircraft has directivity with respect to the noise intensity; as shown in (b) of Fig. 1, ordinarily the noise distribution is greatest between 10 and 30° to the outside of the direction of the exhaust jet (on the lower side (downward) relative to the flight direction) (for details, see Fig. 13). For example, the relative position of the measurement point and aircraft when, during takeoff climb, the aircraft passes a noise measurement point (the case of (1) in Fig. 14) stipulated by environmental standards (Reference 1 related to Fig.14) is just equivalent to the time (position) at which the airframe passes with the direction of maximum noise propagation due to the directivity directed toward the measurement point (angle AZ of the broken-line arrow in Fig. 15).

However, as shown in (a) of Fig. 1, if it is possible to perform thrust deflection to deflect the exhaust jet direction to the upper side (upward) relative to the flight direction using some thrust deflection means (device), then the strong noise components are dispersed up into the air, and the weak noise components are emitted toward the ground, and consequently engine jet exhaust noise on the ground can be greatly reduced.

### Embodiment 1

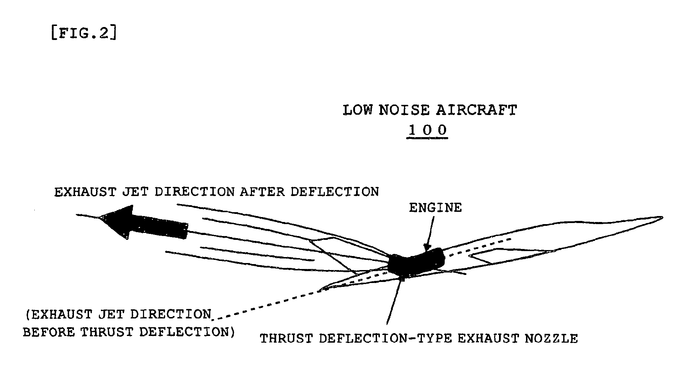

Fig. 2 is an explanatory diagram showing the low noise aircraft 100 of Embodiment 1 of the invention.

This low noise aircraft 100 comprises, as thrust deflection means, a thrust deflection-type exhaust nozzle. This thrust deflection-type exhaust nozzle is installed on the exhaust nozzle comprised in the rear portion of the engine structure, and has a well-known mechanism to deflect the direction of the exhaust jet. Hence the low noise aircraft 100 can easily cause deflection of the exhaust jet direction to the upper side relative to the flight direction by means of the thrust deflection-type exhaust nozzle comprising a well-known mechanism, and as a result the engine exhaust noise on the ground can be greatly reduced.

### Embodiment 2

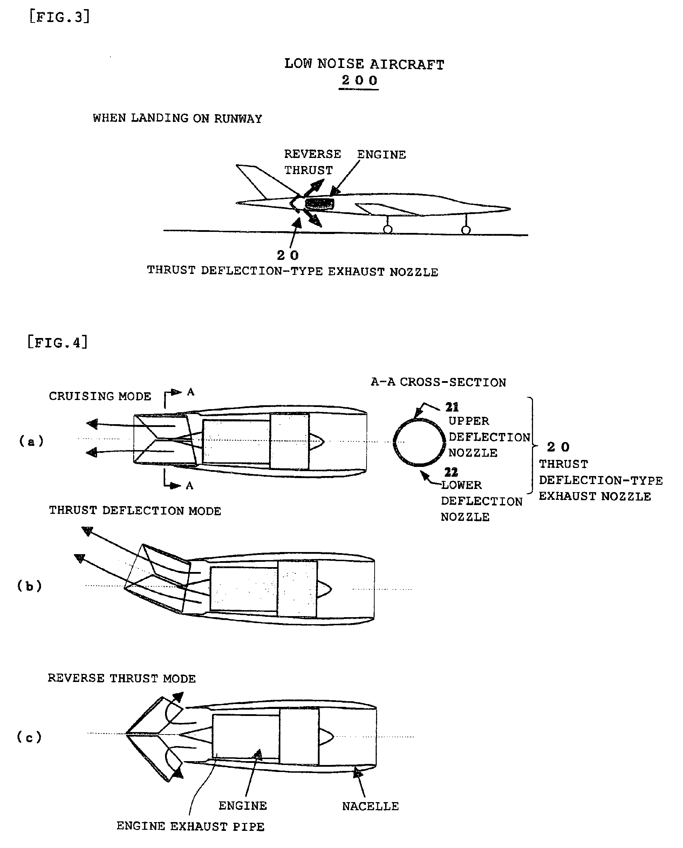

Fig. 3 is an explanatory diagram showing the low noise aircraft 200 of Embodiment 2 of the invention.

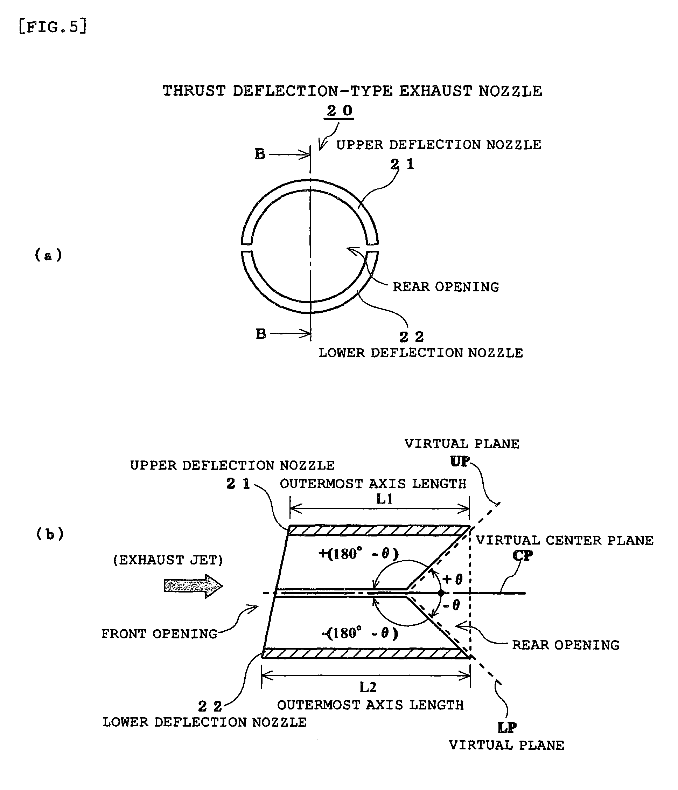

This low noise aircraft 200 comprises, as thrust deflection means, a thrust deflection-type exhaust nozzle 20 capable of changing the direction of the exhaust jet, similarly to Embodiment 1. As shown in Fig. 4, this thrust deflection-type exhaust nozzle 20 comprises a substantially symmetrical upper deflection nozzle 21 and lower deflection nozzle 22, and causes appropriate deflection of the jet direction of the exhaust jet according to each mode, by means of a driving mechanism explained below. The structural features of the upper deflection nozzle 21 and lower deflection nozzle 22 are explained below, referring to Fig. 5. "Cruising mode" refers to a state in which the thrust deflection-type exhaust nozzle 20 does not cause deflection of the jet direction of the exhaust jet (and is mainly a mode adopted when the aircraft is flying at a fixed altitude and at a fixed velocity); "thrust deflection mode" refers to a state in which the thrust deflection-type exhaust nozzle 20 causes deflection to the upper side of the jet direction of the exhaust jet relative to the flight direction (and is mainly a mode adopted when the aircraft is taking off or landing); and "reverse thrust mode" refers to a state in which the upper deflection nozzle 21 and lower deflection nozzle 22 are joined at the respective V cut portions (rear-side opening portions), and the exhaust jet is directed in the reverse direction (and is mainly a mode adopted when the aircraft is landing on the runway, and by this means enhances the deceleration ability of the aircraft).

Fig. 5 is an explanatory cross-sectional view of principle portions, showing a thrust deflection-type exhaust nozzle 20 of the invention. In Fig. 5, (a) is a front view, and (b) is a cross-sectional view along B-B therein.

This thrust deflection-type exhaust nozzle 20 comprises an upper deflection nozzle 21 and a lower deflection nozzle 22, as explained above; the upper deflection nozzle 21 and lower deflection nozzle 22 are respectively equivalent to the upstream-side halves (the solid-line portions in (b) of Fig. 5, that is, the portions to the left of the virtual planes UP, LP) resulting when a cylinder which has been cut by a virtual center plane CP comprising the center axis is further V-cut at angles ±θ (0 < θ < 90°) from the center plane CP by the two virtual planes UP, LP symmetrical about the center plane CP. The end face opposite the V-cut side (the front opening portion) is formed in a tapered shape. The direction of the taper is such that the outermost axis length L2 of the lower deflection nozzle 22 is longer than the outermost axis length L1 of the upper deflection nozzle 21 (that is, L2 > L1). By forming the thrust deflection-type exhaust nozzle 20 from an upper deflection nozzle 21 and a lower deflection nozzle 22 as described above, the jet direction of the exhaust jet can be appropriately deflected. As a result, by causing the exhaust jet direction to be deflected to the upper side relative to the flight direction when the aircraft is taking off or landing, engine exhaust noise on the ground can be greatly reduced. Further, by joining the respective V-cut portions of the upper deflection nozzle 21 and lower deflection nozzle 22 and closing the rear openings, the jet direction of the exhaust jet can be deflected in the reverse direction. By this means, when the aircraft is landing on the runway, the engine can be made to generate a reverse thrust, to enhance the braking function (deceleration ability) of the aircraft.

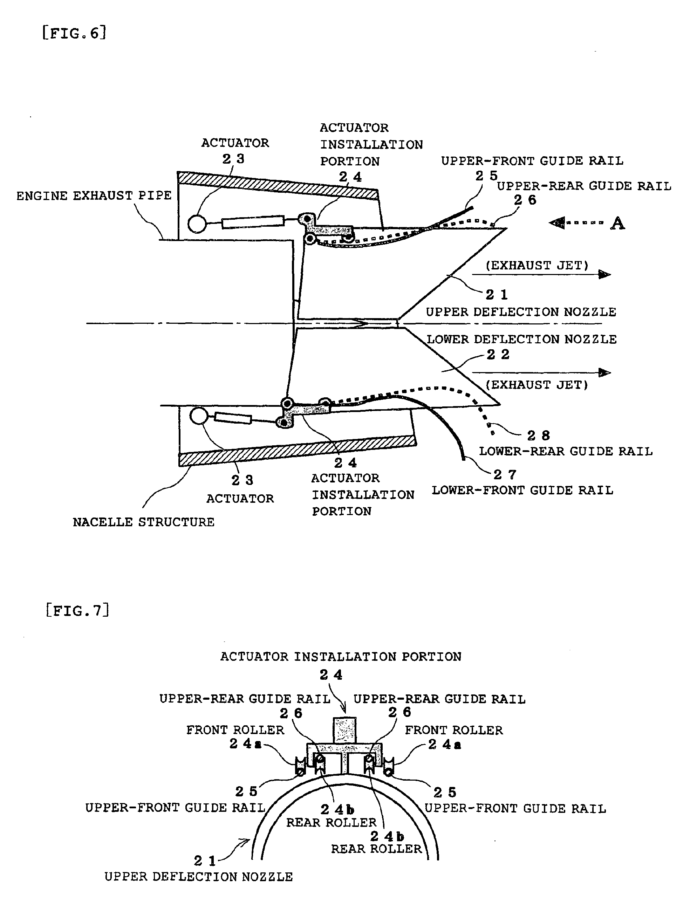

Fig. 6 through Fig. 10 are explanatory diagrams showing mechanisms of driving the thrust deflection-type exhaust nozzle 20 of Embodiment 2. Because the upper deflection nozzle 21 and lower deflection nozzle 22 are in substantially a relation of symmetry, here the explanation mainly addresses the driving mechanism for the upper deflection nozzle 21.

The driving mechanism for the upper deflection nozzle 21 comprises an actuator 23, which causes deflection of the upper nozzle 21; an actuator installation portion 24, which is the portion connecting this actuator 23 and the upper deflection nozzle 21; and upper-front guide rails 25 and upper-rear guide rails 26, enabling movement of the actuator installation portion 24. The actuator 23 comprises, for example, a hydraulic cylinder with a rotation mechanism. Details of the actuator installation portion 24 are explained below referring to Fig. 7; roller pairs are provided in the front and rear (and therefore the total number of rollers comprised by one actuator installation portion 24 is four), of which the front rollers move on the upper-front guide rails 25, and the rear rollers move on the upper-rear guide rails 26. The upper-front guide rails 25, upper-rear guide rails 26, and front installation portion of the actuator 23 are fixed to the nacelle structure or to the engine exhaust pipe. In this embodiment, one end of these guide rails 25, 26 is fixed to the engine exhaust pipe.

The upper-front guide rails 25 and upper-rear guide rails 26 have different loci (rail geometry). That is, the guide rails 25, 26 are fabricated such that, when the upper deflection nozzle 21 travels over these guide rails 25, 26, rotational movement (translation + rotation) are performed, so that the nozzle states required for each of the modes, "cruising mode" → "thrust deflection mode" → "reverse thrust mode", are formed. The explanation above similarly applies to lower-front guide rails 27 and lower-rear guide rails 28.

Fig. 6 is an explanatory diagram showing operation in the cruising mode of the thrust deflection-type exhaust nozzle 20.

In this cruising mode, the thrust deflection-type exhaust nozzle 20 does not deflect the jet direction of the exhaust jet, so that the actuator 23 is in the contracted state, and simultaneously the actuator connection portions 24, 24 are positioned at the respective starting points of the upper and lower front guide rails 25, 27 and of the upper and lower rear guide rails 26, 28.

Fig. 7 is an explanatory diagram showing view A in Fig. 6.

The actuator installation portion 24 is fixed to the upper deflection nozzle 21, and the front roller pair 24a 24a and rear roller pair 24b, 24b, each comprising two units, are installed on the front and rear of the actuator installation portion 24. The front roller pair 24a, 24a is on the upper-front guide rails 25, 25, and the rear roller pair 24b, 24b is on the upper-rear guide rails 26, 26.

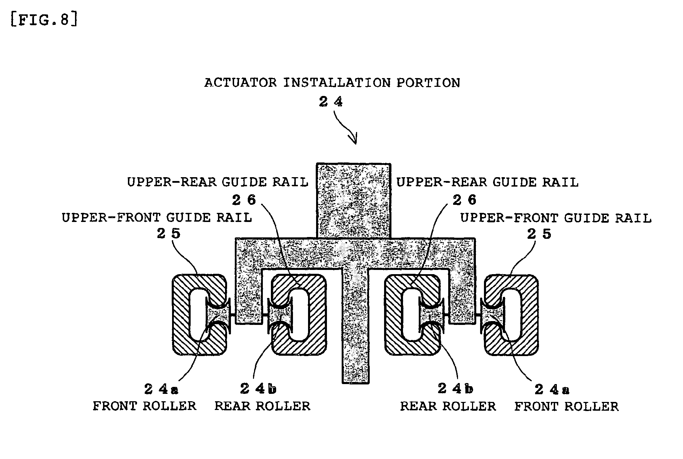

These guide rails 25, 26 may be guide rails having substantially a C-shaped cross-sectional shape, as shown in Fig. 8.

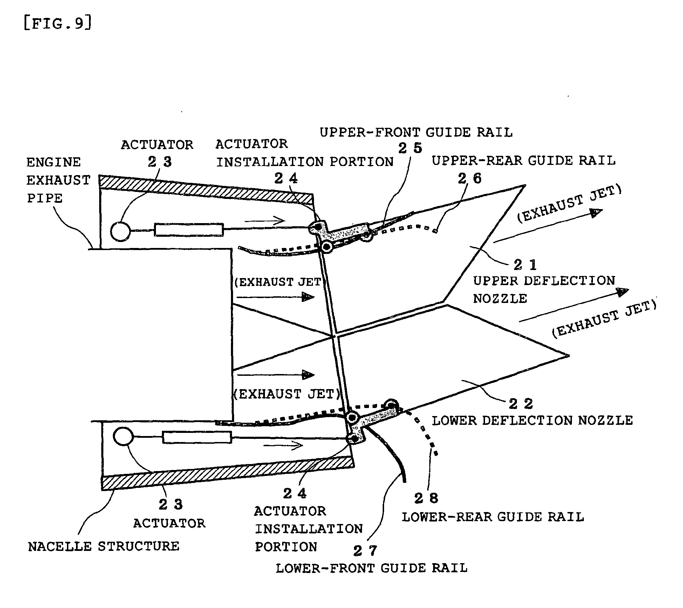

Fig. 9 is an explanatory diagram showing operation in thrust deflection mode of the thrust deflection-type exhaust nozzle 20.

The rod of the actuator 23 extends to press the actuator installation portion 24, the front roller pair 24a, 24a moves along the upper-front guide rails 25, 25, while the rear roller pair 24b, 24b moves along the upper-rear guide rails 26, 26, causing the upper deflection nozzle 21 to be deflected upward, and causing upward deflection of the jet direction of the exhaust jet. Similarly for the lower deflection nozzle 22, the rod of the actuator 23 extends to press the actuator installation portion 24, and the front roller pair 24a, 24a and rear roller pair 24b, 24b move along the lower-front guide rollers 27, 27 and lower-rear guide rollers 28, 28, causing the lower deflection nozzle 22 to be deflected, and causing upward deflection of the jet direction of the exhaust jet.

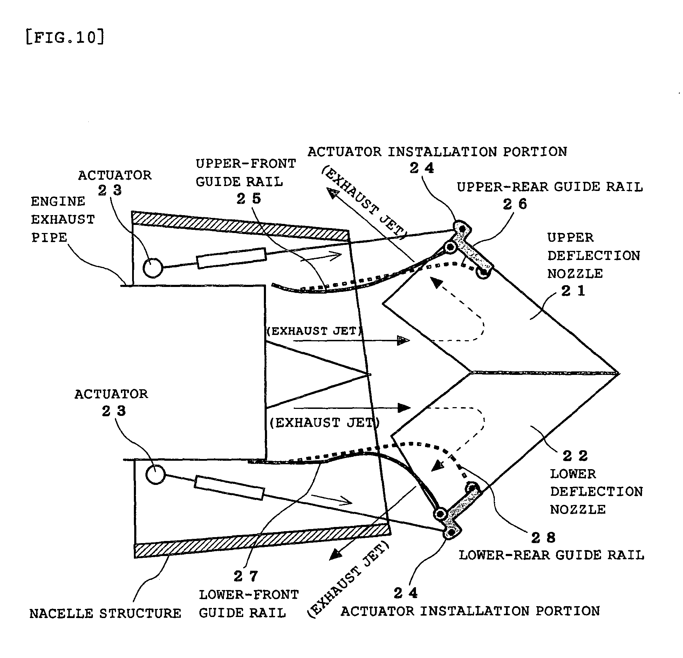

Fig. 10 is an explanatory diagram showing operation in reverse thrust mode of the thrust deflection-type exhaust nozzle 20.

When the actuator 23 further presses the actuator installation portion 24, the actuator installation portion 24 reaches the respective end points of the upper-front guide rails 25 and upper-rear guide rails 26, and the upper deflection nozzle 21 is rotated such that the end face on the V-cut side (rear opening) is directed downward. For the lower deflection nozzle 22 also, the actuator installation portion 24 reaches the respective end points of the lower-front guide rails 27 and lower-rear guide rails 28, and the lower deflection nozzle 22 is rotated such that the end face on the V-cut side (rear opening) is directed upward, and joins with the V-cut end face of the upper deflection nozzle 21. And, the exhaust jet flows into the center opening of the upper deflection nozzle 21, is reflected by the inner face, and flows outside from the front opening. Similarly, the exhaust jet which has flowed into the center opening of the lower deflection nozzle 22 is reflected by the inner face and flows outside from the front opening. In this way, the exhaust jet is deflected in the reverse direction, and the engine generates a reverse thrust.

### Embodiment 3

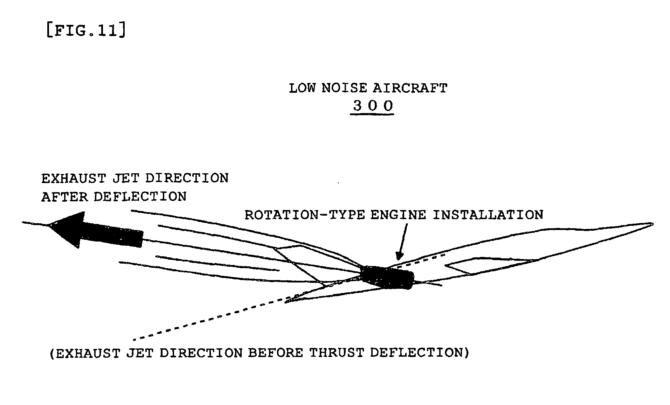

Fig. 11 is an explanatory diagram showing the low noise aircraft 300 of Embodiment 3 of the invention.

This low noise aircraft 300 comprises, as thrust deflection means, a rotation-type engine. This rotation-type engine has installed a well-known rotation mechanism in the structure which installs the engine on a wing or the fuselage of the aircraft, such that the engine can be rotated. Hence by means of this rotation-type engine comprising a well-known mechanism, the low noise aircraft 300 can easily deflect the exhaust jet direction to the upper side relative to the flight direction, and as a result, engine exhaust noise on the ground can be greatly reduced.

### Embodiment 4

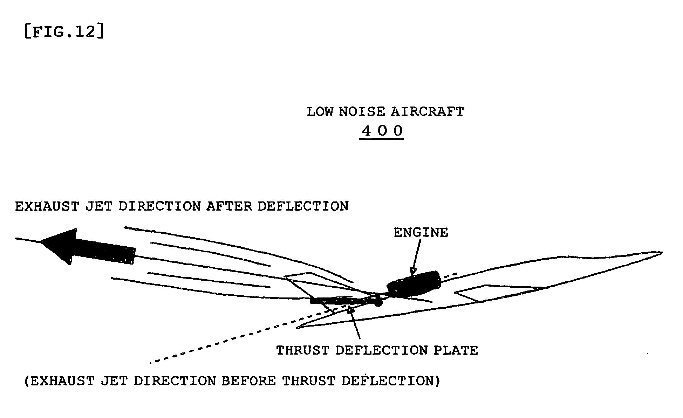

Fig. 12 is an explanatory diagram showing the low noise aircraft 400 of Embodiment 4 of the invention.

This low noise aircraft 400 comprises, as thrust deflection means, a thrust deflection plate. This thrust deflection plate is moveably mounted on the airframe structure to the rear of a mounted engine, such as for example on a main wing or on a face of the fuselage, and can deflect the engine exhaust upward. Hence the low noise aircraft 400 can easily deflect the exhaust jet direction to the upper side relative to the flight direction by means of the thrust deflection plate comprising this simple structure. As a result, engine exhaust noise on the ground can be greatly reduced.

When attempting to reduce noise by changing the exhaust jet direction upward relative to the flight path by means of the above-described thrust deflection devices, the following two points must be considered.

One is the fact that, with the safety standards relating to airworthiness of the aircraft ("Federal Aviation Requirements"; hereafter referred to as "Reference 2"), from the start of the takeoff run, until takeoff is completed, changes in aircraft configuration other than an operation to retract the landing gear are not permitted; the other is that, because takeoff performance is degraded due to thrust deflection, it is necessary not to perform thrust deflection until takeoff is completed, or to perform deflection downward from the flight path, which is the usual method of thrust deflection. As a result, thrust deflection upward in order to reduce noise must be performed at the time at which takeoff is completed. According to the safety standards of the above Reference 2, takeoff completion is said to occur after the aircraft has lifted off from the runway, and landing gear retraction has been completed and an altitude of 400 feet has been attained. The takeoff noise measurement point stipulated in Reference 2 is located at a forward distance of 6.5km from the takeoff run starting point, and where takeoff is completed and takeoff climb is continuing; hence by rapidly performing thrust deflection after takeoff completion, noise can be reduced at the noise measurement point and at subsequent points in the vicinity of the airport.

Below, calculated examples of the state of flight conditions and time history of the noise value at the noise measurement point during takeoff climb and the subsequent climb phase are described, when thrust deflection is not and is performed. In order to simplify the calculations, thrust deflection is not performed during takeoff run on the runway, the takeoff run distance until liftoff of the aircraft from the runway is assumed to be the same, and calculations are performed when thrust deflection is performed at an instant at which the aircraft has lifted off. As a result, calculated climb path angle after liftoff is smaller when thrust deflection is performed, that the altitude is reduced when passing over the noise measurement point, and that as a result of the shorter distance from the measurement point, the noise is increased in this simplified calculation. The performance of actual thrust deflection is as stipulated in Reference 2; at an altitude of 400 feet or higher, at which landing gear retraction has been completed, the degradation of the climb path due to thrust deflection is smaller, and this simplification results in calculation on the side of safety when calculating the effect of thrust deflection.

As indicated below, the calculation of the climb path employs the equation of motion of a point mass along a path.

Wcosγ = L + Tsin(α+δ) where W is the weight, L is the lift, D is the drag, and T is the thrust
Tcos(α+δ) - D = Wsiny where α is the attack angle, γ is the path angle, and δ is the thrust deflection angle

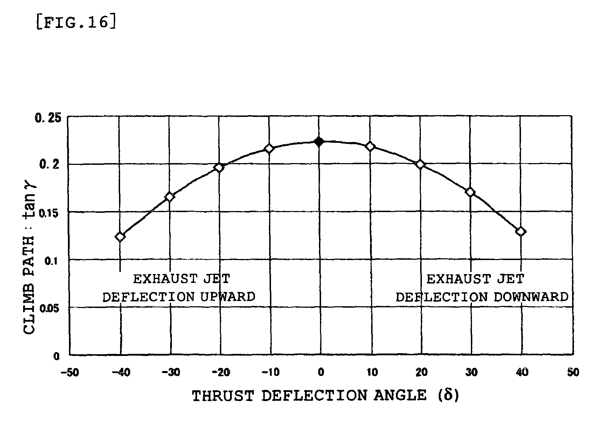

Results of changes in the climb path angle γ, plotting the thrust deflection angle δ along the horizontal axis, appear in Fig. 16. The climb path angle γ declines whether the thrust deflection angle δ is upward or downward. This is the result of a decrease in the cosine component of the thrust T in the above-described equation, and a decrease in the sine component of the climb path angle γ which balances this.

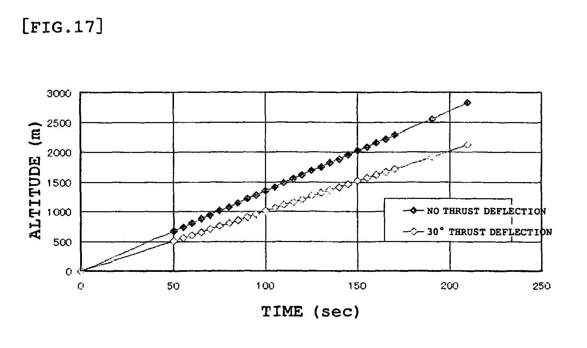

Fig. 17 shows the subsequent flying altitude of the aircraft with the elapsed time after liftoff on the horizontal axis. When thrust deflection is performed, the altitude is lower at the noise measurement point and also at the time of maximum noise, indicating the possibility of an increase in noise.

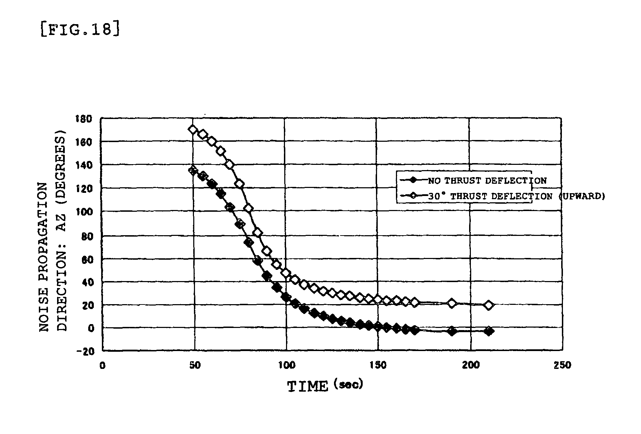

Fig. 18 shows the exhaust jet direction (the noise propagation direction in Fig. 15, equivalent to AZ) as seen from the noise measurement point; the angle is larger when thrust deflection is performed, indicating the possibility that the noise decreases, as is expected from the noise directivity (Fig. 13).

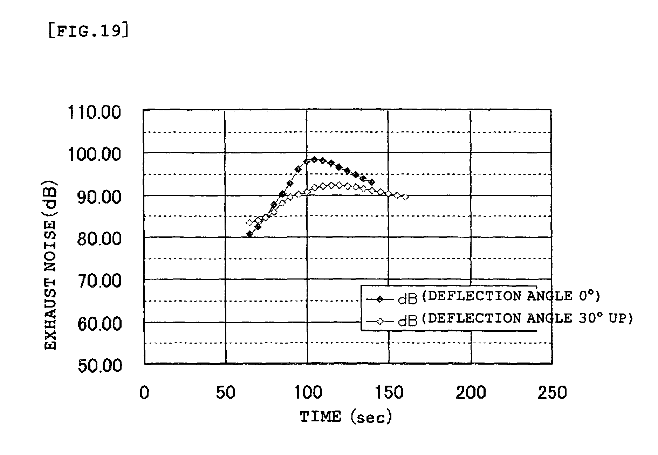

Fig. 19 shows the results of noise calculations combining these two effects, that is, the noise increase effect due to the reduced altitude resulting from thrust deflection, and the noise decrease effect due to the change in direction of the exhaust jet. The calculation example assumes a supersonic business jet aircraft. From these results, it is seen that noise is reduced when thrust deflection is performed.

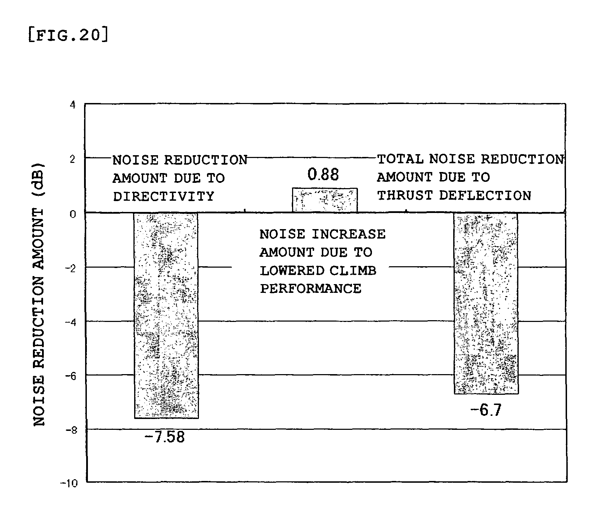

Fig. 20 is a bar graph showing the proportion of the two effects, in the vicinity of approximately 100 seconds after takeoff, at which noise is maximum, at the noise measurement point. It is seen that the noise increase due to the decrease in altitude is approximately 0.9 dB, the noise decrease due to the change in direction of the exhaust jet is approximately - 7.6 dB, and that the total value for the noise decrease is approximately -6.7 dB, indicating that thrust deflection is effective for reducing noise. That is, Fig. 20 shows the effects of thrust deflection during takeoff climb, among the three measurement conditions stipulated in environmental standards, which are takeoff climb ((1) in Fig. 14), takeoff sideline ((2) in Fig. 14), and landing approach ((3) in Fig. 14).

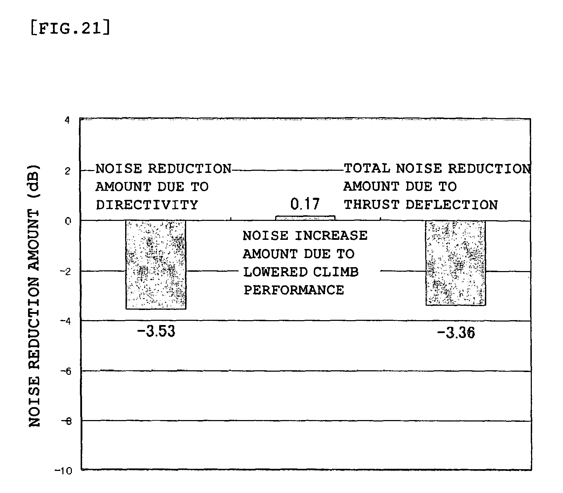

On the other hand, in the takeoff sideline case ((2) in Fig. 14), because the thrust deflection direction is a vertical direction of the aircraft, only the lateral component of the thrust direction angle has an effect on noise reduction, and this effect is small. Fig. 21 is a bar graph showing the effect on noise reduction of this condition; an effect of approximately -3.4 dB is obtained.

And, in the landing approach case ((3) in Fig. 14), at airports where instrument landing system is equipped, the aircraft generally land following a flight path with a descent angle generally standardized at 3°. In this case, while there is some variation according to the type of aircraft, in order to maintain this descent angle for the aircraft, an engine output of approximately 50% of the takeoff output is sustained during descent. Hence engine noise is a smaller source of noise than during takeoff; but the noise measurement point stipulated in the environmental standards of Reference 2 is set close to the airport, and the altitude of the aircraft as it passes this point is lower than during takeoff, so that the noise measured on the ground is often greater than during takeoff.

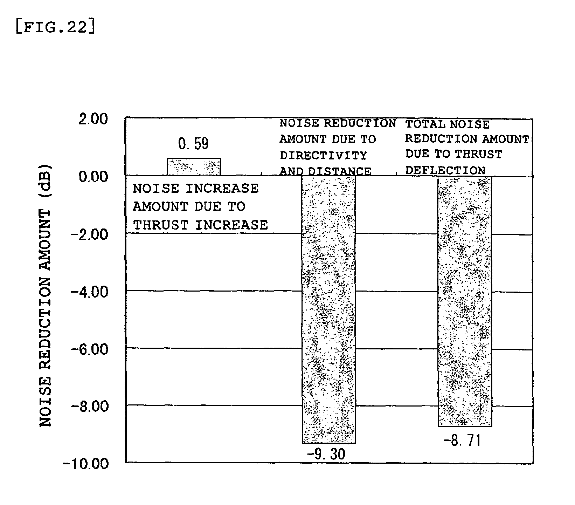

Under these circumstances, if the exhaust jet direction is deflected upward, then the engine output to maintain a descent angle of 3° increases; but similarly to the case of takeoff described above, due to noise directivity, noise reduction on the ground is achieved. This is shown by the bar graph of Fig. 22; by performing thrust deflection, noise reduction of approximately -8.7 dB is obtained.

Environmental standards are being made increasingly stringent from year to year, and the sum of noise levels for the above-described three measurement conditions has been further strengthened by -10 dB, relative to the noise standard values indicated in Reference 2, for aircraft newly manufactured from January 2006. The effect in reducing noise of this invention is in total approximately -19 dB in the above-described sample calculations, for a large noise reduction effect.

As explained above, the following three methods can be used to perform thrust deflection.

A method in which a thrust deflection mechanism is incorporated into the engine body (Embodiments 1 and 2) is a method of providing a mechanism capable of thrust direction deflection in the exhaust nozzle comprised by the rear portion of the engine structure.

A method of causing rotation of the engine body (Embodiment 3) is a method in which an installation method and operation mechanism enabling rotation of the engine are provided in the structure installing the engine on a wing or the fuselage of the aircraft.

A method of installing a deflection device in the rear of the engine (Embodiment 4) is a method of moveably mounting a deflection plate, which can deflect the engine exhaust upward, on the airframe structure to the rear of a mounted engine, such as for example on a main wing or on a face of the fuselage.

### INDUSTRIAL APPLICABILITY

With the retirement from service in October 2003 of the Concorde, the only SST in actual use, there now exist no supersonic aircraft used for transport in the civil aviation sector. There are as yet no prospects for development of a genuine next-generation supersonic transport aircraft seating 250 to 300 passengers as the successor to the Concorde, but as an early stage of such development, research is underway at NASA of the U.S. and business aircraft manufacturers on a supersonic business jet (SSBJ) seating approximately eight to ten passengers and on a small-size SST seating approximately 20 to 30 passengers, and active research is being conducted aimed at achieving both cruising performance at supersonic speeds, and reduced noise during takeoff and landing. If both of these goals are achieved, there is a strong possibility of actual development of an SSBJ or SST. And, even in the case of ordinary subsonic aircraft, in addition to ordinary mechanisms to reduce noise, application of this invention is expected to enable further noise reduction, enabling conformance to increasingly stringent noise standards.

## Claims

1. A low noise aircraft (100,200,300,400), having thrust deflection means for making the thrust direction of engine variable, whereby
the thrust deflection means is arranged to deflect the thrust direction of the engine to the upper side (upward) relative to the course direction (flight direction) of the aircraft, subsequently to make a maximum propagation direction of engine jet exhaust noise to be deflected in such a direction as kept away from the ground and make engine noise level to be reduced on the ground at the time of takeoff and landing of the aircraft.

2. The low noise aircraft(100,200) according to Claim 1, **characterized in that** the thrust deflection means(20) is a thrust deflection-type exhaust nozzle, which is a nozzle installed on an outlet portion of the engine, and which can optionally change the exhaust jet direction by changing the direction of the normal vector of an opening face of the nozzle.

3. The low noise aircraft(100,200) according to Claim 2, **characterized in that** the thrust deflection-type exhaust nozzle comprises an upper deflection nozzle(21) and a lower deflection nozzle(22), which are substantially symmetrical, and the two deflection nozzles(21,22) are respectively equivalent to upstream-side halves (+(180°-θ), -(180°-θ)) resulting when a cylinder, which has been cut in a center plane thereof with the center axis being included, is further V-cut by two planes symmetrical relative to the center plane at angles ±θ (0 < θ < 90°) from the center plane.

4. The low noise aircraft(100,200) according to Claim 3, **characterized in that** a front opening portion of the thrust deflection-type exhaust nozzle, into which the exhaust jet flows, has a tapered shape, such that the outermost axis length of the lower deflection nozzle(22) is longer than the outermost axis length of the upper deflection nozzle(21).

5. The low noise aircraft(300) according to Claim 1, **characterized in that** the thrust deflection means is a rotation-type engine, having a rotation mechanism, which can change the exhaust jet direction in an optional direction by changing the installation angle of the engine.

6. The low noise aircraft(400) according to Claim 1, **characterized in that** the thrust deflection means is a thrust deflection plate, which is positioned behind the outlet portion of the engine, and which can change the exhaust jet direction to an optional direction by changing the angle of intersection with the engine exhaust.

## Patentansprüche

1. Geräuscharmes Luftfahrzeug (100, 200, 300, 400) mit einer Schubdeflektoreinrichtung für eine variable Schubrichtung des Triebwerks, wobei
die Schubdeflektoreinrichtung zum Umlenken der Schubrichtung des Triebwerks zur Oberseite (aufwärts) in Bezug auf die Kursrichtung (Flugrichtung) des Flugzeugs angeordnet ist, um anschließend die maximale Ausbreitungsrichtung des Triebwerksabgasstrahllärms in eine derartige Richtung umzulenken, dass dieser vom Boden ferngehalten wird, und um den Triebwerksgeräuschpegel am Boden beim Starten und Landen des Luftfahrzeugs zu verringern.

2. Geräuscharmes Luftfahrzeug (100, 200) nach Anspruch 1, **dadurch gekennzeichnet, dass** die Schubdeflektoreinrichtung (20) eine Abgasdüse vom Schubdeflektionstyp ist, bei welcher es sich um eine Düse handelt, die an einem Auslassbereich des Triebwerks angeordnet ist und welche die Richtung des Abgasstrahls optional ändern kann, indem sie die Richtung des normalen Vektors einer Öffnungsfläche der Düse ändert.

3. Geräuscharmes Flugzeug (100, 200) nach Anspruch 2, **dadurch gekennzeichnet, dass** die Abgasdüse vom Schubdeflektionstyp eine obere Deflektordüse (21) und eine untere Deflektordüse (22) aufweist, die im Wesentlichen symmetrisch sind, und die beiden Deflektordüsen (21, 22) jeweils stromaufwärtigen Hälften (+(180°-θ), -(180°-θ)) äquivalent sind, welche sich ergeben, wenn ein Zylinder, welcher in der Mittelebene einschließlich der Mittelachse geschnitten wurde, ferner V-förmig entlang zweier Ebenen geschnitten wird, die von der Mittelebene aus unter einem Winkel von ±θ (0<θ<90°) symmetrisch zu der Mittelebene verlaufen.

4. Geräuscharmes Luftfahrzeug (100, 200) nach Anspruch 3, **dadurch gekennzeichnet, dass** ein vorderer Öffnungsbereich der Abgasdüse vom Schubdeflektionstyp, in welchen der Abgasstrahl strömt, eine zulaufende Form aufweist, so dass die äußerste Achsenlänge der unteren Deflektordüse (22) länger als die äußerste Achsenlänge der oberen Deflektordüse (21) ist.

5. Geräuscharmes Luftfahrzeug (300) nach Anspruch 1, **dadurch gekennzeichnet, dass** die Schubdeflektoreinrichtung ein Triebwerk vom Rotationstyp ist, mit einem Rotationsmechanismus, welcher in der Lage ist, die Abgasstrahlrichtung in eine optionale Richtung zu ändern, indem er den Stellwinkel des Triebwerks ändert.

6. Geräuscharmes Luftfahrzeug (400) nach Anspruch 1, **dadurch gekennzeichnet, dass** die Schubdeflektoreinrichtung eine Schubdeflektorplatte ist, die hinter dem Auslassbereich des Triebwerks angeordnet ist, und welche die Richtung des Abgasstrahls in eine optionale Richtung ändern kann, indem sie den Schnittwinkel mit dem Triebwerkabgas ändert.

## Revendications

1. Aéronef à faible bruit (100, 200, 300, 400) comprenant un moyen de déflection de poussée destiné à rendre variable la direction de la poussée du réacteur, dans lequel
ledit moyen de déflection de poussée est disposé pour défléchir la direction de poussée dudit réacteur vers le côté supérieur (vers le haut) par rapport à la direction de course (direction de vol) dudit aéronef, et pour ensuite défléchir la direction de propagation maximale du bruit du jet d'échappement du réacteur dans une direction telle qu'il est écarté de la terre et le niveau de bruit du réacteur est réduit au niveau de la terre au moment de décollage et d'atterrissage dudit aéronef.

2. Aéronef à faible bruit (100, 200) selon la revendication 1, **caractérisé en ce que** ledit moyen de déflection de poussée (20) est une buse d'échappement du type déflecteur de poussée, qui est une buse montée à la zone de sortie du réacteur et qui est apte à changer, à titre facultatif, la direction du jet d'échappement par un changement de la direction du vecteur normal de la face d'ouverture de ladite buse.

3. Aéronef à faible bruit (100, 200) selon la revendication 2, **caractérisé en ce que** ladite buse d'échappement du type déflecteur de poussée comprend une buse de déflection supérieure (21) et une busée de déflection inférieure (22), qui sont sensiblement symétriques, et les deux buses de déflection (21, 22) sont respectivement équivalents à des moitiés amonts (+(180°-θ), -(180°-θ)) obtenues si un cylindre, qui à été coupé selon le plan central de celui-ci, incluant l'axe central, est coupé en forme d'un V par deux plans symétriques par rapport au plan central sous ses angles ±θ (0<θ<90°) à partir dudit plan central.

4. Aéronef à faible bruit (100, 200) selon la revendication 3, **caractérisé en ce qu'**une partie d'ouverture frontale de ladite buse d'échappement du type déflecteur de poussée, dans laquelle s'écoule le jet d'échappement, a une forme conique de sorte que la longueur de l'axe ultrapériphérique de la buse de déflection inférieure (22) est plus longue que la longueur de l'axe ultrapériphérique de la buse de déflection supérieure (21).

5. Aéronef à faible bruit (300) selon la revendication 1, **caractérisé en ce que** ledit moyen de déflection de poussée est un réacteur du type rotatif comprenant un mécanisme de rotation apte à faire varier la direction du jet d'échappement dans une direction optionnelle par changement de l'angle d'incidence dudit réacteur.

6. Aéronef à faible bruit (400) selon la revendication 1, **caractérisé en ce que** ledit moyen de déflection de poussée est une plaque de déflection de poussée positionnée derrière la zone de sortie du réacteur et qui est apte à varier la direction du jet d'échappement dans une direction optionnelle par changement de l'angle d'intersection avec l'échappement du réacteur.
